# EUROPEAN PATENT SPECIFICATION

(11) **EP 4 391 147 B1**
(45) Date of publication and mention of the grant of the patent: **29.10.2025**
(21) Application number: 22865109.7
(22) Date of filing: 02.09.2022
(51) Int. Cl.: H01M 50/249, H01M 50/507, H01M 50/213, H01M 10/48, H01M 50/569

(54) **BATTERY MODULE, BATTERY PACK INCLUDING THE BATTERY MODULE, AND VEHICLE INCLUDING THE BATTERY PACK**
BATTERIEMODUL, BATTERIEPACK MIT DEM BATTERIEMODUL UND FAHRZEUG MIT DEM BATTERIEPACK
MODULE DE BATTERIE, BLOC-BATTERIE COMPRENANT UN MODULE DE BATTERIE ETVÉHICULE COMPRENANT UN BLOC-BATTERIE

(30) Priority: 03.09.2021 KR 20210117934
(43) Date of publication of application: 26.06.2024
(73) Proprietor: LG Energy Solution, Ltd., Seoul 07335 (KR)
(72) Inventor: YOON, Hyoung-Chul, Daejeon 34122 (KR); JEONG, Han-Yong, Daejeon 34122 (KR); SON, Young-Su, Daejeon 34122 (KR)
(74) Representative: Plasseraud IP
(86) International application number: PCT/KR2022/013229
(87) International publication number: WO 2023/033607

(56) References cited:
- JP-A- 2009 277 420
- JP-A- 2020 205 187
- JP-B2- 6 213 687
- JP-B2- 6 233 654
- KR-B1- 101 348 579
- US-A1- 2020 403 209
- US-A1- 2021 203 029

## Description

### TECHNICAL FIELD

The present application claims priority to Korean Patent Application No. 10-2021-0117934 filed on September 3, 2021 in the Republic of Korea.

The present disclosure relates to a battery module, a battery pack including the battery module, and a vehicle including the battery pack.

### BACKGROUND ART

Secondary batteries have high applicability according to product groups and electrical characteristics such as high energy density, and thus, are commonly applied not only to mobile devices but also to electric vehicles (EVs) or hybrid vehicles (HEVs) driven by electric power sources. Because secondary batteries may radically reduce the use of fossil fuel and do not generate any by-products that come with energy consumption, the secondary batteries are gaining attention as a new alternative energy source for improving eco-friendliness and energy efficiency.

Types of secondary batteries that are currently widely used include lithium-ion batteries, lithium polymer batteries, nickel cadmium batteries, nickel hydride batteries, and nickel zinc batteries. An operating voltage of a unit secondary battery cell, that is, a unit battery cell, ranges from about 2.5 V to about 4.5 V. Accordingly, when a higher output voltage is required, a battery pack may be configured by connecting a plurality of battery cells in series. Also, a battery pack may be configured by connecting a plurality of battery cells in parallel according to charge/discharge capacity required for the battery pack. Accordingly, the number of battery cells included in a battery pack may be set in various ways according to a required output voltage and/or charge/discharge capacity.

When a battery pack is configured by connecting a plurality of battery cells in series and/or in parallel, a method of first configuring a battery module including at least one battery cell and adding other elements by using the at least one battery module to configure a battery pack or a battery rack is general.

A conventional battery module generally includes a plurality of battery cells and a module housing in which the plurality of battery cells are accommodated. Because the battery module is manufactured such that the plurality of battery cells are densely packed in a narrow space, it is important to accurately measure the heat generated from each secondary battery in order to prevent fire. That is, it is important to properly arrange a thermistor around the secondary battery cell.

Meanwhile, in order to increase the size of the battery and to enhance safety, a bus bar assembly using a wire bonding method that automatically fuses when an overcurrent occurs can be considered. The wire bonding may be welding by, for example, an ultrasonic welding method. Through this wire bonding, the bus bar plate and the battery cell may be electrically connected.

However, according to the wire bonding method, since the strength of the wire is low, there is a possibility that the wire is easily damaged by an external force. For example, in the process of wiring a thermistor to place the thermistor at the part of the battery cell assembly with the highest temperature, a wire may be damaged by a worker and the electrical connection may be disconnected.

Therefore, it is requested to find a way to provide a battery module having a low risk of insulation and damage while measuring the temperature in the vicinity of a battery cell having a maximum temperature in the battery cell assembly, and a battery pack and a vehicle including the battery module.

An example of a battery pack that includes a plurality of battery cells electrically connected to each other is described in US 2021/0203029 A1, which discloses the preamble of claim 1.

### DISCLOSURE

### Technical Problem

The present disclosure is designed to solve the problems of the related art, and therefore the present disclosure is directed to providing a battery module to which wire bonding is applied, in which a temperature in the vicinity of a battery cell having a maximum temperature in a battery cell assembly is measured.

In addition, the present disclosure is also directed to minimizing wire damage and consequent insulation risk at most.

However, the technical purpose to be solved by the present disclosure are not limited to the above, and other objects not mentioned herein will be clearly understood by one of ordinary skill in the art from the following disclosure.

### Technical Solution

In one aspect of the present disclosure, there is provided a battery module according to claim 1.

At this time, the bus bar assembly may include:
a bus bar plate mounted on at least a part of the outer surface of the module housing and configured to cover the at least one groove; and
a plurality of bus bar wires configured to electrically connect terminals of the battery cells exposed through the plurality of openings of the module housing and the bus bar plate.

Here, the at least one groove may be located between adjacent battery cells.

Meanwhile, the at least one groove may extend from one end of the module housing to the inside of the battery cell assembly.

Meanwhile, the at least one groove may extend from one end of the module housing to the center of the battery cell assembly.

Meanwhile, the battery module may include an injection tube configured to cover at least a part of the thermistor.

At this time, the injection tube may be seated within the at least one groove.

Meanwhile, the injection tube may be bendable along the at least one groove.

Meanwhile, the injection tube may have a shape complementary to the at least one groove.

Meanwhile, the battery module may further comprise a glue located between the injection tube and the bus bar plate to bond the injection tube and the bus bar plate.

At this time, the glue may fill a space between the at least one groove and the injection tube. In addition, the glue may fix the injection tube

Meanwhile, the battery module may further comprise an insulation resin located in a space between the thermistor and the bus bar plate to prevent electrical contact between the thermistor and the bus bar plate.

In another aspect of the present disclosure, there is provided a battery pack according to claim 13, including at least one battery module according to the above embodiments.

In another aspect of the present disclosure, there is provided a vehicle according to claim 14, including at least one battery pack according to the above embodiments.

### Advantageous Effects

According to the present disclosure, in a battery module to which wire bonding is applied, the temperature in the vicinity of a battery cell having a maximum temperature in the battery cell assembly may be easily measured.

In addition, according to the present disclosure, wire damage and the resulting insulation risk may be effectively reduced.

Therefore, cost increase may be minimized.

Therefore, according to the present disclosure, a battery module having improved safety, and a battery pack and a vehicle including the battery module may be provided.

The present disclosure may have various other effects, which will be described in each embodiment or the description of effects which may be easily inferred by one of ordinary skill in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a view for describing a battery module, according to an embodiment of the present disclosure.
FIG. 2 is an exploded perspective view of the battery module of FIG. 1.
FIG. 3 is a view for describing the module housing of the battery module of FIG. 1.
FIG. 4 is a view for describing the thermistor and the interconnection board of FIG. 1.
FIGS. 5 and 6 are views for describing how the thermistor is mounted on the module housing.
FIG. 7 is a view for describing a battery module according to another embodiment of the present disclosure.
FIG. 8 is a view for describing a battery module according to still another embodiment of the present disclosure.
FIG. 9 is a view for describing the relationship among the thermistor, the injection tube and the bus bar assembly.
FIG. 10 is a view for describing a battery pack including the battery module of FIG. 1.
FIG. 11 is a view for describing a vehicle including the battery pack of FIG. 10.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

In addition, in order to help the understanding of the present disclosure, the accompanying drawings are not drawn to scale, but dimensions of some components may be exaggerated.

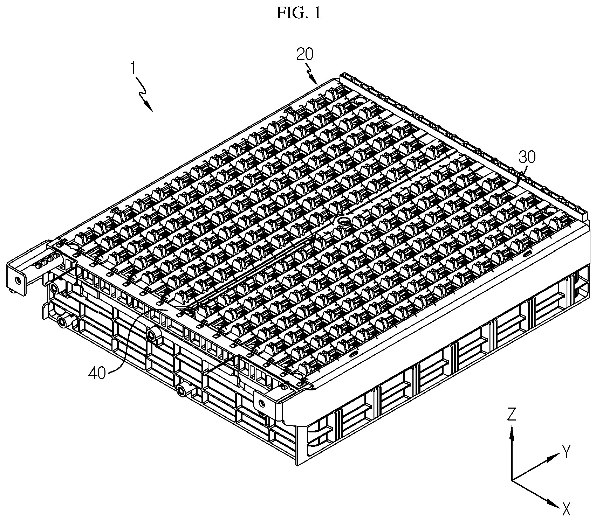

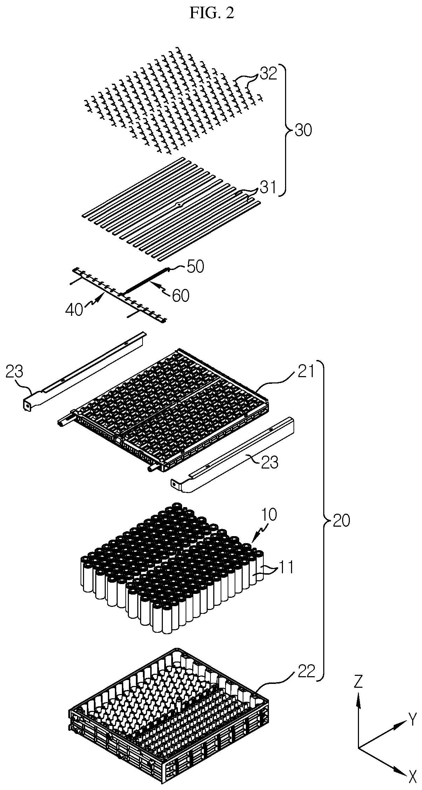

FIG. 1 is a view for describing a battery module, according to an embodiment of the present disclosure, and FIG. 2 is an exploded perspective view of the battery module of FIG. 1.

Referring to FIGS. 1 and 2, a battery module 1 according to an embodiment of the present disclosure may include a battery cell assembly 10, a module housing 20, a bus bar assembly 30, an interconnection board 40, and a thermistor 50.

Referring to FIG. 2, the battery cell assembly 10 may include a plurality of battery cells 11. The plurality of battery cells 11 may be accommodated in the module housing 20. The plurality of battery cells 11 may be stacked to be electrically connected to each other within the module housing 20. Each of the plurality of battery cells 11 will be described in more detail.

Referring to FIG. 2, the battery cell 11 may be, for example, a secondary battery. Also, the battery cell 11 may be a cylindrical battery cell 11. However, this does not limit the type of the battery cell 11, and other types of battery cells such as a prismatic cell or a pouch cell may be employed in the battery module 1 of the present disclosure.

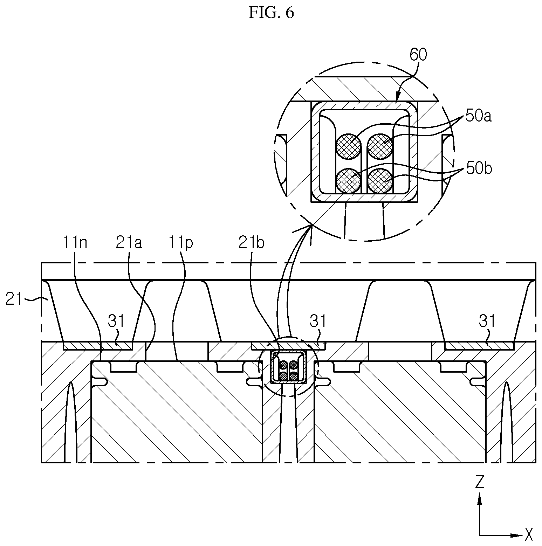

The battery cell 11 may include a positive electrode terminal 11p and a negative electrode terminal 11n. For example, referring to FIG. 6, the positive electrode terminal 11p and the negative electrode terminal 11n may be provided together at one end of the battery cell 11. For example, referring to FIG. 6, the positive electrode terminal 11p may be provided at the center of one end of the battery cell 11, and the negative electrode terminal 11n may be provided at the outer circumference of one end of the battery cell 11. However, the positions of the positive electrode terminal 11p and the negative electrode terminal 11n are not limited thereto and may be variously modified according to the design method of the battery cell 11.

Referring back to FIGS. 1 and 2, the module housing 20 may have an inner space for accommodating the battery cell assembly 10. The module housing 20 may include an upper housing 21 and a lower housing 22. The module housing 20 may further include, for example, a side plate 23 covering the upper housing 21.

The upper housing 21 and the lower housing 22 may be formed by being coupled by a fastening method such as bolting or welding, for example. Alternatively, the upper housing 21 and the lower housing 22 may be manufactured in an integrated form. However, the coupling method of the upper housing 21 and the lower housing 22 is not limited thereto, and other coupling methods may be adopted. The module housing 20 may include a high-strength plastic material or a metal material to secure rigidity.

The battery cell assembly 10 may be accommodated in the module housing 20. The plurality of battery cells 11 constituting the battery cell assembly 10 may be placed upright within the module housing 20 so that both ends of the battery cells 11 come into contact with the upper housing 21 and the lower housing 22, respectively. For example, as shown in FIG. 2, the plurality of battery cells 11 may be disposed upright so that the positive electrode terminal 11p and the negative electrode terminal 11n face the upper housing 21.

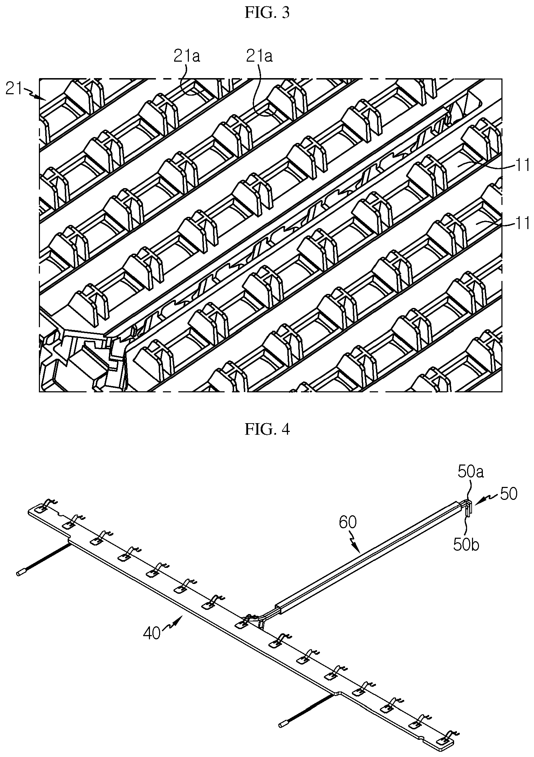

FIG. 3 is a view for describing the module housing of the battery module of FIG. 1.

Referring to FIGS. 2 and 3, the upper housing 21 may include a plurality of openings 21a and at least one groove 21b.

The plurality of openings 21a may be holes for exposing at least a part of the plurality of battery cells 11 to the outside. For example, referring to FIG. 3, one end of the battery cell 11 may communicate with the outside of the module housing 20 through the plurality of openings 21a. That is, one end of the battery cell 11 may be exposed to the outside of the module housing 20 through the plurality of openings 21a. Therefore, the battery cell 11 may be electrically connected to a bus bar wire 32 to be described later.

The groove 21b may be provided between the plurality of openings 21a. The groove 21b may be formed to a predetermined depth so that at least one thermistor 50 may be seated thereon. In addition, the at least one groove 21b may be located between adjacent battery cells 11.

The at least one groove 21b may be provided to extend from one end of the module housing 20 to the inside of the battery cell assembly 10. Preferably, the at least one groove 21b may be provided to extend from one end of the module housing 20 to the center of the battery cell assembly 10. When the temperature of the battery cell assembly 10 in which the plurality of battery cells 11 are concentrated is measured, the temperature of the battery cell 11 located at the center of the battery cell assembly 10 may be highest. Accordingly, the groove 21b preferably extends from one end of the module housing 20 to the center of the battery cell assembly 10 so that the thermistor 50 may be located at the center of the battery cell assembly 10.

However, when the temperature gradient is determined by measuring the temperature not only at the center of the battery cell assembly 10 but also at a location other than the center, the safety performance of the battery module 1 may be secured more reliably. Accordingly, although not shown in the drawings, at least one groove 21b may be provided not only in the center of the battery cell assembly 10 but also in other locations.

Meanwhile, one end of the groove 21b may be adjacent to an interconnection board 40 to be described later. For example, referring to FIG. 2, the groove 21b may have an extended shape to accommodate a wire extending from the interconnection board 40 to the center of the battery cell assembly 10.

Referring to FIG. 2, the bus bar assembly 30 may include at least one bus bar plate 31 and a plurality of bus bar wires 32.

The bus bar assembly 30 may be mounted on at least a part of an outer surface of the module housing 20. The bus bar assembly 30 may be electrically connected to the plurality of battery cells 11 of the battery cell assembly 10. Specifically, the bus bar plate 31 may be electrically connected to a plurality of wires. Also, the plurality of bus bar wires 32 may be electrically connected to the plurality of battery cells 11. Therefore, the bus bar wire 32 may electrically connect the bus bar plate 31 and the electrode terminal of the battery cell 11. The plurality of bus bar wires 32 may electrically connect the terminals of the battery cells 11 exposed through the plurality of openings 21a of the module housing 20 and the bus bar plate 31.

Referring to FIG. 2, the bus bar plate 31 may be mounted on at least a part of the outer surface of the module housing 20. Also, the bus bar plate 31 may cover the at least one groove 21b. In this case, the battery module 1 may further include a glue that bonds at least a part of the outer surface of the upper housing 21 and the bus bar plate 31.

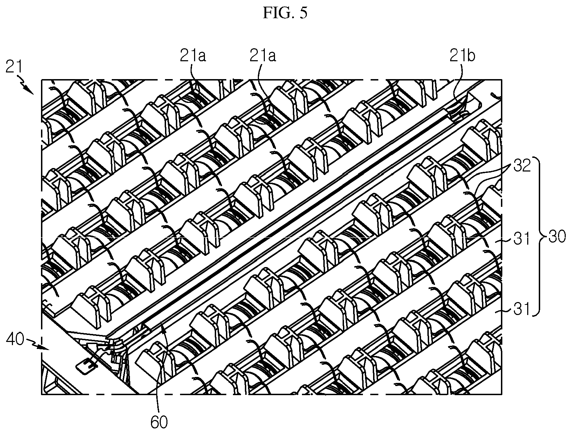

The coupling and arrangement relationships among the bus bar plate 31, the bus bar wire 32 and other components will be described later in detail while referring to FIGS. 5 to 9.

FIG. 4 is a view for describing the thermistor and the interconnection board of FIG. 1. In addition, FIGS. 5 and 6 are views for describing how the thermistor is mounted on the module housing.

Referring to FIGS. 2 and 4, the interconnection board 40 may be connected to the at least one bus bar assembly 30. Also, the interconnection board 40 may sense voltages of the plurality of battery cells 11 of the battery cell assembly 10. The interconnection board 40 may be mounted on one end of the upper housing 21. More specifically, referring to FIG. 2, the interconnection board 40 may extend long to both ends of the upper housing 21. With this structure, the interconnection board 40 may sense voltages of all battery cells 11 accommodated in the battery module 1.

Referring to FIG. 4, the thermistor 50 may be provided on the interconnection board 40. More specifically, the thermistor 50 may have a shape including a wire extending from a portion of the interconnection board 40 to the opposite side.

The thermistor 50 may be seated in the module housing 20 to measure the temperature of at least one battery cell 11 among the plurality of battery cells 11. For example, referring to FIGS. 5 and 6, the thermistor 50 may be seated in the groove 21b of the upper housing 21. Furthermore, the thermistor 50 may be inserted toward the inside of the module housing 20 at one end of the groove 21b of the upper housing 21. Although not shown in the drawings, the thermistor 50 may be fixed in contact with an outer surface of an adjacent battery cell 11. For example, the battery module 1 may further include an insulation resin positioned in a space between the thermistor 50 and the bus bar plate 31 to prevent electrical contact between the thermistor 50 and the bus bar plate 31. That is, the position of the thermistor 50 may be fixed by the insulation resin.

Meanwhile, the thermistor 50 may be plural, for example. For example, referring to FIG. 4, two thermistors 50a, 50b may be provided to extend from the interconnection board 40.

Referring to FIG. 4, the battery module 1 may further include an injection tube 60 covering at least a part of the thermistor 50. The injection tube 60 may cover a wire that is at least a part of the thermistor 50. That is, the injection tube 60 may electrically insulate the thermistor 50 from surroundings by covering the wire of the thermistor 50.

Referring to FIG. 5, the injection tube 60 may be seated in the at least one groove 21b. The injection tube 60 may have a shape complementary to the at least one groove 21b. Therefore, the injection tube 60 may be accurately fitted within the groove 21b and accurately fixed within the groove 21b without shaking or gap.

The injection tube 60 may be configured to be bendable along the at least one groove 21b. Therefore, even if the groove 21b has a curved shape rather than a straight line, the injection tube 60 may be deformable to fit the curved shape of the groove 21b. Therefore, the injection tube 60 may be firmly fixed in the groove 21b.

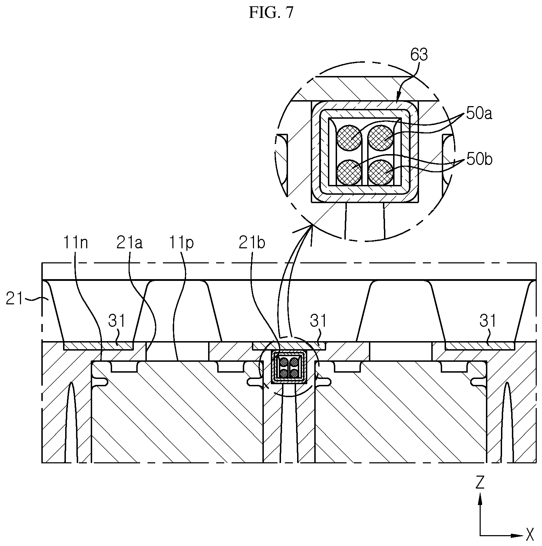

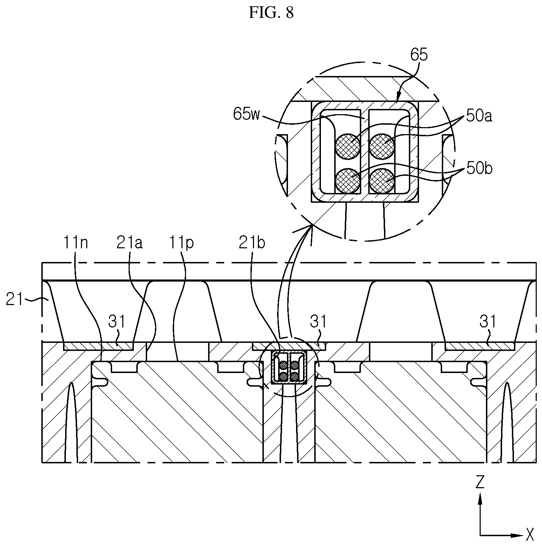

FIG. 7 is a view for describing a battery module according to another embodiment of the present disclosure, and FIG. 8 is a view for describing a battery module according to still another embodiment of the present disclosure.

Referring to FIG. 7, the injection tube 63 may include a plurality of tubes unlike the injection tube 60 of FIG. 6. For example, as shown in FIG. 7, the ejection tube may include a two-layered tube. According to this structure, the rigidity of the injection tube 63 may be further increased. In addition, even if one tube of the plurality of tubes is damaged, electrical insulation between the wire of the thermistor 50 accommodated inside and the outside may be reliably maintained by the remaining tube.

Referring to FIG. 8, the injection tube 65 may include at least one compartment membrane 65w that divides the space within the injection tube 65 into a plurality of spaces. For example, the injection tube 65 may include a compartment membrane 65w that divides the space within the injection tube 65 into two spaces as shown in FIG. 8. According to this structure, by reducing the empty space inside the injection tube 65 and fixing the thermistor 50, it is possible to prevent the wire of the thermistor 50 accommodated in the space inside the injection tube 65 from shaking vertically and horizontally. Accordingly, the possibility of damage to the thermistor 50 may be reduced.

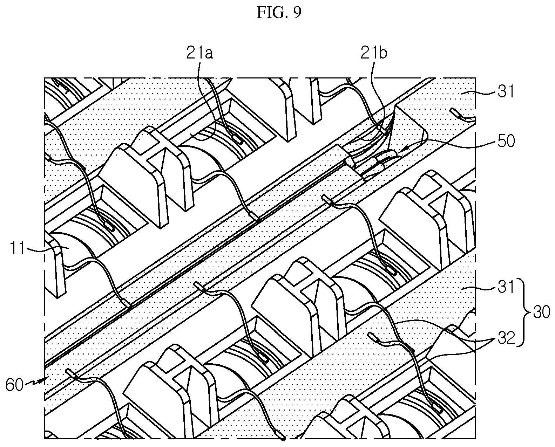

FIG. 9 is a view for describing the relationship among the thermistor 50, the injection tube 60 and the bus bar assembly 30.

Referring to FIGS. 6 and 9, the battery cell 11 may be a cylindrical battery cell 11, and may have both a positive electrode terminal 11p and a negative electrode terminal 11n at one end. At this time, the positive electrode terminal 11p and the negative electrode terminal 11n of the battery cell 11 may be exposed to the outside of the module housing 20 by the opening 21a of the upper housing 21.

Referring to FIG. 9, at least one groove 21b may be formed in the upper housing 21, and a thermistor 50 surrounded by the injection tube 60 may be seated in the groove 21b. The thermistor 50 may be inserted and fixed toward the inside of the module housing 20 at one end of the groove 21b. The thermistor 50 is located in a space between the thermistor 50 and the bus bar plate 31, and the position thereof may be securely fixed by an insulation resin that prevents electrical contact between the thermistor 50 and the bus bar plate 31. Therefore, the reliability of the temperature measured by the thermistor 50 may be increased.

Referring to FIG. 9, the injection tube 60 and the thermistor 50 seated in the groove 21b may be covered by the bus bar plate 31. In this case, the battery module 1 may include a glue positioned between the injection tube 60 and the bus bar plate 31 to bond the injection tube 60 and the bus bar plate 31. That is, the injection tube 60 and the bus bar plate 31 may be bonded and fixed by the glue. The glue may fill the space between the at least one groove 21b and the injection tube 60 and fix the injection tube 60. Therefore, the bus bar plate 31 may be firmly fixed in a certain position.

Meanwhile, referring to FIG. 9, the bus bar plate 31 may be mounted on at least a part of the outer surface of the module housing 20, in addition to the groove 21b. At this time, the bus bar plate 31 may be disposed side by side between the opening 21a and the opening 21a. In this case, the glue may also be applied between the upper housing 21 and the bus bar plate 31.

Then, the bus bar wire 32 may electrically connect the bus bar plate 31 and the electrode terminal of the battery cell 11. For example, referring to FIG. 9, the positive electrode terminal 11p may be located at the center of one end of the battery cell 11, and the negative electrode terminal 11n may be located at an outer circumference of one end of the battery cell 11. The bus bar wire 32 may connect the bus bar plate 31 and the positive electrode terminal 11p located on one side of the battery cell 11. At the same time, the bus bar wire 32 may connect the bus bar plate 31 and the negative electrode terminal 11n located on the other side of the battery cell 11. For example, referring to FIG. 9, the plurality of battery cells 11 arranged in a direction in which the bus bar plate 31 extends are connected in parallel to each other, and the battery cells 11 arranged in a direction perpendicular to the direction in which the bus bar plate 31 extends are connected in series with each other. However, the connection method of the battery cells 11 is not limited thereto, and may vary depending on the connection method of the bus bar wire 32.

According to the arrangement structure of the thermistor 50 and the arrangement structure of the bus bar assembly 30, the temperature of the battery cell 11 located in the center, which is the highest temperature portion of the battery cell assembly 10, may be effectively measured. In addition, due to the structure in which the wire included in the thermistor 50 is inserted into the module housing 20 and fixed at the same time, even a weak bus bar wire 32 may be maintained without being damaged.

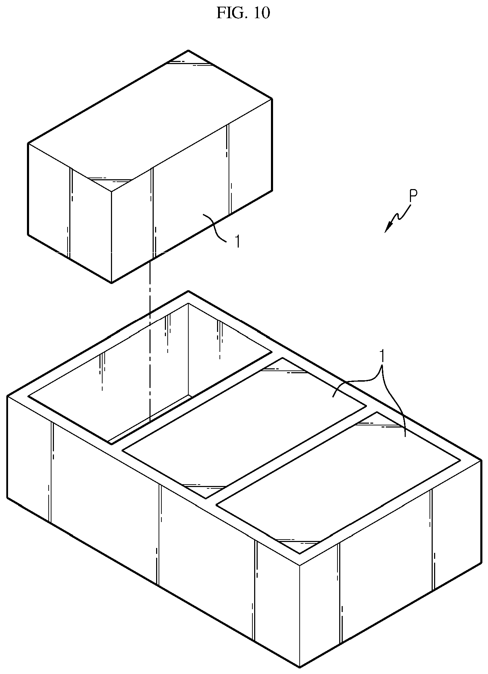

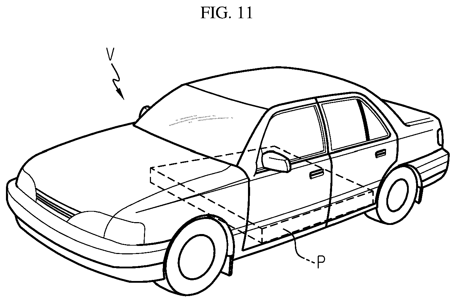

FIG. 10 is a view for describing a battery pack including the battery module of FIG. 1, and FIG. 11 is a view for describing a vehicle including the battery pack of FIG. 10.

Referring to FIG. 10, a battery pack P according to the present disclosure may include at least one battery module 1 according to the present disclosure. Also, the battery pack P according to the present disclosure may include a pack case in which the at least one battery module 1 may be accommodated. In addition, various elements, for example, a battery management system (BMS), a pack case, a relay, and a current sensor, which are known at the time of filling the present disclosure, in addition to the battery module 1 may be further included in the battery pack P.

Referring to FIG. 11, a vehicle V according to the present disclosure may include at least one battery pack P according to the present disclosure.

According to various embodiments as described above, in the battery module 1 to which wire bonding is applied, the temperature in the vicinity of the battery cell 11 having a maximum temperature in the battery cell assembly 10 may be easily measured. In addition, damage to the bus bar wire 32 and the resulting risk of insulation may be effectively reduced. Furthermore, cost increase may be minimized.

Accordingly, according to the present disclosure, the battery module 1 having improved safety, and the battery pack P and the vehicle V including the battery module 1 may be provided.

It will be understood by one of ordinary skill in the art that when terms indicating directions such as upper and lower are used, these terms are only for convenience of explanation and may vary according to a position of a target object, a position of an observer, etc.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A battery module (1) comprising:
a battery cell assembly (10) including a plurality of battery cells (11);
a module housing (20) having an inner space for accommodating the battery cell assembly (10);
at least one bus bar assembly (30) mounted on at least a part of an outer surface of the module housing (20) and electrically connected to the plurality of battery cells (11) of the battery cell assembly (10);
an interconnection board (40) connected to the at least one bus bar assembly (30) and configured to sense voltages of the plurality of battery cells (11) of the battery cell assembly (10); and
at least one thermistor (50) provided on the interconnection board (40) and seated in the module housing (20) to measure the temperature of at least one battery cell (11) among the plurality of battery cells (11);
a plurality of openings (21a) configured to expose the plurality of battery cells (11) to the outside; and at least one groove (21b) to seat the at least one thermistor (50);
**characterized in that** the groove (21b) is provided between the plurality of openings (21a) and is formed to a predetermined depth.

2. The battery module (1) according to claim 1, wherein the bus bar assembly (30) includes:
a bus bar plate (31) mounted on at least a part of the outer surface of the module housing (20) and configured to cover the at least one groove (21b); and
a plurality of bus bar wires (32) configured to electrically connect terminals of the battery cells (11) exposed through the plurality of openings (21a) of the module housing (20) and the bus bar plate (31).

3. The battery module (1) according to claim 2, wherein the at least one groove (21b) is located between adjacent battery cells (11).

4. The battery module (1) according to claim 2, wherein the at least one groove (21b) extends from one end of the module housing (20) to the inside of the battery cell assembly (10).

5. The battery module (1) according to claim 2, wherein the at least one groove (21b) extends from one end of the module housing (20) to the center of the battery cell assembly (10).

6. The battery module (1) according to claim 2, wherein the battery module (1) includes an injection tube (60) configured to cover at least a part of the thermistor (50).

7. The battery module (1) according to claim 6, wherein the injection tube (60) is seated within the at least one groove (21b).

8. The battery module (1) according to claim 6, wherein the injection tube (60) is bendable along the at least one groove (21b).

9. The battery module (1) according to claim 6, wherein the injection tube (60) has a shape complementary to the at least one groove (21b).

10. The battery module (1) according to claim 6, further comprising a glue located between the injection tube (60) and the bus bar plate (31) to bond the injection tube (60) and the bus bar plate (31).

11. The battery module (1) according to claim 10, wherein the glue fills a space between the at least one groove (21b) and the injection tube (60) and fixes the injection tube (60).

12. The battery module (1) according to claim 2, further comprising an insulation resin located in a space between the thermistor (50) and the bus bar plate (31) to prevent electrical contact between the thermistor (50) and the bus bar plate (31).

13. A battery pack (P) comprising at least one battery module (1) according to any one of claims 1 to 12.

14. A vehicle (V) comprising at least one battery pack (P) according to claim 13.

## Patentansprüche

1. Batteriemodul (1), umfassend:
eine Batteriezellenanordnung (10), welche eine Mehrzahl von Batteriezellen (11) umfasst;
ein Modulgehäuse (20), welches einen inneren Raum zum Aufnehmen der Batteriezellenanordnung (10) aufweist;
wenigstens eine Sammelschienenanordnung (30), welche an wenigstens einem Teil einer äußeren Fläche des Modulgehäuses (20) montiert ist und elektrisch mit der Mehrzahl von Batteriezellen (11) der Batteriezellenanordnung (10) verbunden ist;
eine Verbindungsplatine (40), welche mit der wenigstens einen Sammelschienenanordnung (30) verbunden ist und dazu eingerichtet ist, Spannungen der Mehrzahl von Batteriezellen (11) der Batteriezellenanordnung (10) zu erfassen; und
wenigstens einen Thermistor (50), welcher an der Verbindungsplatine (40) bereitgestellt ist und in dem Modulgehäuse (20) aufgenommen ist, um die Temperatur wenigstens einer Batteriezelle (11) unter der Mehrzahl von Batteriezellen (11) zu messen;
eine Mehrzahl von Öffnungen (21a), welche dazu eingerichtet sind, die Mehrzahl von Batteriezellen (11) zu dem Äußeren freizulegen; und wenigstens eine Nut (21b), um den wenigstens einen Thermistor (50) aufzunehmen;
**dadurch gekennzeichnet, dass** die Nut (21b) zwischen der Mehrzahl von Öffnungen (21a) bereitgestellt ist und bis zu einer vorbestimmten Tiefe gebildet ist.

2. Batteriemodul (1) nach Anspruch 1, wobei die Sammelschienenanordnung (30) umfasst:
eine Sammelschienenplatte (31), welche an wenigstens einem Teil der äußeren Fläche des Modulgehäuses (20) montiert ist und dazu eingerichtet ist, die wenigstens eine Nut (21b) abzudecken; und
eine Mehrzahl von Sammelschienendrähten (32), welche dazu eingerichtet sind, Anschlüsse der Batteriezellen (11) elektrisch zu verbinden, welche durch die Mehrzahl von Öffnungen (21a) des Modulgehäuses (20) und der Sammelschienenplatte (31) freigelegt sind.

3. Batteriemodul (1) nach Anspruch 2, wobei die wenigstens eine Nut (21b) zwischen benachbarten Batteriezellen (11) angeordnet ist.

4. Batteriemodul (1) nach Anspruch 2, wobei sich die wenigstens eine Nut (21b) von einem Ende des Modulgehäuses (20) zu dem Inneren der Batteriezellenanordnung (10) erstreckt.

5. Batteriemodul (1) nach Anspruch 2, wobei sich die wenigstens eine Nut (21b) von einem Ende des Modulgehäuses (20) zu der Mitte der Batteriezellenanordnung (10) erstreckt.

6. Batteriemodul (1) nach Anspruch 2, wobei das Batteriemodul (1) einen Injektionsschlauch (60) umfasst, welcher dazu eingerichtet ist, wenigstens einen Teil des Thermistors (50) abzudecken.

7. Batteriemodul (1) nach Anspruch 6, wobei der Injektionsschlauch (60) innerhalb der wenigstens einen Nut (21b) aufgenommen ist.

8. Batteriemodul (1) nach Anspruch 6, wobei der Injektionsschlauch (60) entlang der wenigstens einen Nut (21b) biegbar ist.

9. Batteriemodul (1) nach Anspruch 6, wobei der Injektionsschlauch (60) eine zu der wenigstens einen Nut (21b) komplementäre Form aufweist.

10. Batteriemodul (1) nach Anspruch 6, ferner umfassend einen Klebstoff, welcher zwischen dem Injektionsschlauch (60) und der Sammelschienenplatte (31) angeordnet ist, um den Injektionsschlauch (60) und die Sammelschienenplatte (31) zu verbinden.

11. Batteriemodul (1) nach Anspruch 10, wobei der Klebstoff einen Raum zwischen der wenigstens einen Nut (21b) und dem Injektionsschlauch (60) füllt und den Injektionsschlauch (60) fixiert.

12. Batteriemodul (1) nach Anspruch 2, ferner umfassend ein Isolierharz, welches in einem Raum zwischen dem Thermistor (50) und der Sammelschienenplatte (31) angeordnet ist, um einen elektrischen Kontakt zwischen dem Thermistor (50) und der Sammelschienenplatte (31) zu verhindern.

13. Batteriepack (P), umfassend wenigstens ein Batteriemodul (1) nach einem der Ansprüche 1 bis 12.

14. Fahrzeug (V), umfassend wenigstens einen Batteriepack (P) nach Anspruch 13.

## Revendications

1. Module de batterie (1) comprenant :
un ensemble de cellules de batterie (10) comportant une pluralité de cellules de batterie (11) ;
un boîtier de module (20) présentant un espace interne pour accueillir l'ensemble de cellules de batterie (10) ;
au moins un ensemble barre omnibus (30) monté sur au moins une partie d'une surface externe du boîtier de module (20) et connecté électriquement à la pluralité de cellules de batterie (11) de l'ensemble de cellules de batterie (10) ;
une carte d'interconnexion (40) connectée à l'au moins un ensemble barre omnibus (30) et configurée pour détecter des tensions de la pluralité de cellules de batterie (11) de l'ensemble de cellules de batterie (10) ; et
au moins une thermistance (50) disposée sur la carte d'interconnexion (40) et logée dans le boîtier de module (20) pour mesurer la température d'au moins une cellule de batterie (11) parmi la pluralité de cellules de batterie (11) ;
une pluralité d'ouvertures (21a) configurées pour exposer la pluralité de cellules de batterie (11) à l'extérieur ; et au moins une rainure (21b) destinée à loger l'au moins une thermistance (50) ;
**caractérisé en ce que** la rainure (21b) est disposée entre la pluralité d'ouvertures (21a) et est formée à une profondeur prédéterminée.

2. Module de batterie (1) selon la revendication 1, dans lequel l'ensemble barre omnibus (30) comporte :
une plaque de barre omnibus (31) montée sur au moins une partie de la surface externe du boîtier de module (20) et configurée pour recouvrir l'au moins une rainure (21b) ;
et
une pluralité de fils de barre omnibus (32) configurés pour connecter électriquement des bornes des cellules de batterie (11) exposées à travers la pluralité d'ouvertures (21a) du boîtier de module (20) et de la plaque de barre omnibus (31).

3. Module de batterie (1) selon la revendication 2, dans lequel l'au moins une rainure (21b) est située entre des cellules de batterie (11) adjacentes.

4. Module de batterie (1) selon la revendication 2, dans lequel l'au moins une rainure (21b) s'étend d'une extrémité du boîtier de module (20) à l'intérieur de l'ensemble de cellules de batterie (10).

5. Module de batterie (1) selon la revendication 2, dans lequel l'au moins une rainure (21b) s'étend d'une extrémité du boîtier de module (20) au centre de l'ensemble de cellules de batterie (10).

6. Module de batterie (1) selon la revendication 2, dans lequel le module de batterie (1) comporte un tube d'injection (60) configuré pour recouvrir au moins une partie de la thermistance (50).

7. Module de batterie (1) selon la revendication 6, dans lequel le tube d'injection (60) est logé à l'intérieur de l'au moins une rainure (21b).

8. Module de batterie (1) selon la revendication 6, dans lequel le tube d'injection (60) peut être plié le long de l'au moins une rainure (21b).

9. Module de batterie (1) selon la revendication 6, dans lequel le tube d'injection (60) présente une forme complémentaire à l'au moins une rainure (21b).

10. Module de batterie (1) selon la revendication 6, comprenant en outre une colle située entre le tube d'injection (60) et la plaque de barre omnibus (31) pour coller le tube d'injection (60) et la plaque de barre omnibus (31).

11. Module de batterie (1) selon la revendication 10, dans lequel la colle remplit un espace entre l'au moins une rainure (21b) et le tube d'injection (60) et fixe le tube d'injection (60).

12. Module de batterie (1) selon la revendication 2, comprenant en outre une résine d'isolation située dans un espace entre la thermistance (50) et la plaque de barre omnibus (31) pour empêcher un contact électrique entre la thermistance (50) et la plaque de barre omnibus (31).

13. Bloc-batterie (P) comprenant au moins un module de batterie (1) selon l'une quelconque des revendications 1 à 12.

14. Véhicule (V) comprenant au moins un bloc-batterie (P) selon la revendication 13.
